# EUROPÄISCHE PATENTSCHRIFT

(11) **EP 2 390 153 B1**
(45) Veröffentlichungstag und Bekanntmachung des Hinweises auf die Patenterteilung: **08.05.2019**
(21) Anmeldenummer: 11157496.8
(22) Anmeldetag: 09.03.2011
(51) Int. Cl.: B60T 11/04, B62L 5/00, B62L 3/08, F16D 65/28

(54) **Bremsaktor für Fahrrad, Tretkurbelgetriebe mit Bremsaktor und Verfahren zum Erzeugen einer Bremsaktorbewegung für ein Fahrrad**
Brake actuator for bicycle, pedal crank drive with brake actuator and method for generating a brake actuator movement for a bicycle
Actionneur de frein pour vélo, rouage à manivelle de pédalier doté d'un actionneur de frein et procédé de production d'un mouvement d'actionneur de frein pour un vélo

(30) Priorität: 06.05.2010 DE 102010028664
(43) Veröffentlichungstag der Anmeldung: 30.11.2011
(73) Patentinhaber: Robert Bosch GmbH, 70442 Stuttgart (DE)
(72) Erfinder: Braun, Sigmund, 72127, Kusterdingen (DE)

(56) Entgegenhaltungen:
- DE-A1- 4 438 109
- DE-U1- 9 300 985
- FR-A- 1 086 244

## Beschreibung

### Stand der Technik

Auf dem Gebiet der Erfindung, d.h. das Gebiet der Fahrradbremsen, sind einerseits Rücktrittbremsen und andererseits Felgenbremsen und Scheibenbremsen bekannt. Bekannte Rücktrittbremsen sind in einem Hinterradnabengetriebe untergebracht, das auch eine wählbare Übersetzung vorsieht. Daher sind Rücktrittbremsen nur für Nabenschaltungen üblich und werden üblicherweise nicht für Fahrräder mit Kettenschaltungen verwendet.

Bei Elektrofahrrädern, die einen elektrischen Zusatzantrieb haben, werden Mittelmotorkonstruktionen, bei denen der elektrische Antrieb an der Tretkurbel vorgesehen ist, üblicherweise nicht mit Rücktrittbremsen ausgestattet, da dies zu grundsätzlichen konstruktiven Problemen führt. Daher können gemäß dem Stand der Technik Elektrofahrräder mit Mittelmotorkonstruktion nicht mit Rücktrittbremsen ausgestattet werden.

Jedoch bieten Rücktrittbremsen einige Vorteile, vor allem durch ihre komfortable und intuitive Benutzung.

Aus der Druckschrift DE 93 00 985 U1 ist eine Rücktrittbremse bekannt, bei der die Kurbelwelle mit einem Freilauf versehen ist, der im Falle eines Rücktritts die Kurbelwelle schließt, um die Rücktrittbewegung in eine Bewegung zum Antrieb von Bremsvorrichtungen zu wandeln. Jedoch lässt die schemenhafte Darstellung auf eine aufwändige und raumgreifende Realisierung schließen, zumal einige zusätzlichen Elemente die Kurbelwelle umgeben.

Dokument FR 1 086 244 offenbart einen Bremsaktor für ein Fahrrad.

Es ist daher die Aufgabe der Erfindung, ein Bremskonstruktion und ein Bremskrafterzeugungsverfahren vorzusehen, die einfach und platzsparend zu realisieren ist.

### Offenbarung der Erfindung

Das der Erfindung zugrunde liegende Konzept ist es, eine an einem Hebelelement befestigte Schlaufe an der Pedalantriebswelle (d.h. Kurbelwelle des Fahrrads) vorzusehen, die durch eine Umlaufführung am Hebelelement läuft, gegenüber der Pedalantriebswelle bei einer Rücktrittbewegung der Pedalantriebswelle zu spannen, um die Rücktrittbewegung über die Schlaufe auf das Hebelelement zu übertragen, das von der übertragenen Rücktrittbewegung in eine Richtung gedreht wird. In der Richtung, in der das Hebelelement bei einer Rücktrittbewegung gedreht wird, liegt eine Schnittstelle, an der die Hebelbewegung an eine mechanische Verbindung mit einer Bremse übertragen wird. Dadurch wird die Rücktrittbewegung der Pedalantriebswelle über die gespannte Schlaufe an das Hebelelement übertragen, dass in dieser Drehrichtung (des Hebelelements) auf eine mechanische Bremsenverbindung trifft, die dadurch von dem Hebelelement angetrieben wird. In die Richtung, in der das Hebelelement bei einer Rücktrittbewegung von der Schlaufe gedreht wird, kann sich das Hebelelement weiter drehen als in die entgegengesetzte Richtung. Bei Drehung zur Bremsenverbindung hin kann sich das Hebelelement soweit drehen, dass die Umlaufführung die Schlaufe strafft, um die Drehbewegung von der Pedalantriebswelle zu der Bremsenverbindung zu übertragen.

In entgegengesetzter Richtung (d.h. der Drehung der Pedalantriebswelle in Antriebsrichtung) hält ein Anschlag das Hebelelement auf. Der Anschlag stoppt die weitere Bewegung des Hebelelements an einer Position, in der die Umlaufführung die Schlaufe nicht vollständig spannt, so dass die Bewegung der Pedalantriebswelle nicht weiter auf die Schlaufe übertragen wird. In Antriebsrichtung umgibt die Schlaufe locker die Pedalantriebswelle, da das Hebelelement aufgrund des Anschlags sich nicht weiter von der Pedalantriebswelle weg bewegen kann, insbesondere nicht zu einer Position, in der die Umlaufführung die Schlaufe straffen würde.

Der Anschlag (zur Begrenzung der Hebelbewegung bei Drehung der Pedalantriebswelle in Antriebsrichtung) garantiert somit, dass die Hebelbewegung in eine Richtung begrenzt ist, und verhindert dadurch, dass die Schlaufe ausreichend gestrafft wird, um eine wesentlichen Kraft von der Pedalantriebswelle an das Hebelelement zu übertragen.

Der Anschlag befindet sich näher an einer Normalstellung des Hebelelements als die mechanische Schnittstelle zur Betätigung einer Bremse, die auf gegenüberliegend zu dem Anschlag ausgebildet ist, sich jedoch weiter entfernt von der Normalstellung befindet als der Anschlag. Dadurch strafft die Umlaufführung die Schlaufe stärker, wenn sich das Hebelelement an der mechanischen Schnittstelle befindet, als wenn sich das Hebelelement am Anschlag befindet. Dadurch wird, im Gegensatz zur Position an dem Anschlag, auf das Hebelelement von der Pedalantriebswelle über die gestraffte Schlaufe die Bewegung der Pedalantriebswelle übertragen, wobei das Hebelelement seinerseits diese Bewegung an die mechanische Schnittstelle weitergibt, um so die Bremse zu betätigen. Als Normalstellung kann eine Position des Hebelelements angesehen werden, das Hebelelement annimmt, wenn keine Kraft auf die Pedalantriebswelle ausgeübt wird. Das Hebelelement ist vorzugsweise vorgespannt, wobei die Vorspannung das Hebelelement von der Pedalantriebswelle weg drückt. Die Vorspannung und eine Spannung, die die Schlaufe ggf. vorsieht, sind in Gleichgewicht, wenn die Pedalantriebswelle in Ruhe ist, wobei die Normalstellung auch der Stellung des Hebelelements entsprechen kann, die das Hebelelement in diesem Gleichgewicht annimmt.

Der Bremseffekt wird erzielt, weil beim Zurücktreten der Pedalantriebswelle die Schlaufe über das Hebelelement, d.h. über die Umlaufführung, die als Spannelement bezeichnet werden kann, gespannt wird. In diesem gespannten Zustand kann das Hebelelement eine Kraft auf die Bremsschnittstelle übertragen, wobei der gespannte Zustand bei einer Hebelstellung auftritt, bei der das Hebelelement die Bremsschnittstelle betätigt, und wobei der gespannte Zustand nicht auftritt, wenn das Hebelelement am Anschlag liegt, da Anschlag und Bremsschnittstelle nicht symmetrisch angeordnet sind.

Die Erfindung betrifft daher einen Bremsaktor für ein Fahrrad. Der Bremsaktor selbst ist zur Montage an der Pedalantriebswelle geeignet, umfasst jedoch die Pedalantriebswelle selbst nicht. Insbesondere wird die Erfindung für Elektrofahrräder verwendet, beispielsweise Elektrofahrräder, deren Elektroantrieb an der Pedalantriebswelle angeordnet ist. Erfindungsgemäß umfasst der Bremsaktor eine Schlaufe, die zur Montage an eine Pedalantriebswelle eingerichtet ist. Die Schlaufe kann auch als Band bezeichnet werden. Die Schlaufe ist aus einem elastischen Material mit hoher Zugfestigkeit, beispielsweise aus einem Stahlblech. Die Schlaufe ist vollumfänglich geschlossen, und hat entlang ihres Umfangs einen konstanten Querschnitt in Form eines sehr flachen Rechtecks (d.h. den Querschnitt eines Bandes oder eines Bleches).

Die Schlaufe sieht einen Innenraum vor, der eingerichtet ist, die Pedalantriebswelle umfänglich aufzunehmen. Der Innenraum ist nicht der gesamte Raum den die Welle umschließt, sondern ein zylinderförmiger Raum, so dass eine Pedalantriebswelle sich in ihrer Längserstreckung senkrecht zu der Ebene erstrecken kann, in der sich die Schlaufe erstreckt. Ein Teil des Umfangs der Schlaufe stößt an den Innenraum an, der für die Pedalantriebswelle vorgesehen ist, wobei zumindest die Hälfte des Umfangs des Innenraums an die Schlaufe angrenzt. Dies ermöglicht einen Reibkontakt zwischen Schlaufe und Pedalantriebswelle, um gegebenenfalls eine Tangentialkraft der Pedalantriebswelle an die Schlaufe zu übertragen.

Der Bremsaktor umfasst ferner ein Hebelelement, der von einem Drehlager versetzt zu dem Innenraum gelagert ist. Das Hebelelement kann über das Drehlager mit einem Drehlager der Pedalantriebswelle verbunden sein. Das Drehlager des Hebelelements ist in radialer Richtung bezogen auf die Pedalantriebswelle bzw. bezogen auf den Innenraum versetzt. Durch die Anordnung des Drehlagers (gegenüber dem Hohlraum bzw. der Pedalantriebswelle) wird definiert, wie stark die die Schlaufe bei unterschiedlichen Hebelpositionen gespannt wird. Unter anderem durch die Anordnung des Drehlagers und der Ausgestaltung des Hebelelements wird die Schlaufe spannungsfrei vorgesehen, wenn sich das Hebelelement am Anschlag befindet, und wird gespannt vorgesehen, wenn sich das Hebelelement an der Bremsschnittstelle befindet.

Das Hebelelement weist zur Straffung der Schlaufe eine Umlaufführung für die Schlaufe auf, die innerhalb der Schlaufe angeordnet ist und die Schlaufe führt. Die Umlaufführung ist fest mit dem Hebelelement verbunden bzw. einteilig mit diesem ausgeführt. Ein Teil des Umfangs der Umlaufführung (d.h. derjenige Abschnitt der Umlaufführung, der entfernt zu dem Innenraum der Pedalantriebswelle gelegen ist) grenzt an einen Abschnitt der Schlaufe an, der ebenso entfernt zu dem Innenraum der Pedalantriebswelle gelegen ist. Die Umlaufführung oder zumindest der an die Schlaufe angrenzende Abschnitt der Umlaufführung hat einen kreisförmigen oder kreisbogenförmigen Querschnitt.

Die Umlaufführung ist auf dem Hebelelement versetzt zu dem Drehlager innerhalb der Schlaufe vorgesehen. Die Umlaufführung ist angeordnet ist, bei Drehung des Hebels ein Schlaufenende von dem Hohlraum weg oder zu diesem hin zu führen.

Die Erfindung ermöglicht es, übliche Fahrräder (insbesondere Elektrofahrräder) mit einer Rücktrittbremse auszustatten, die nicht über eine Nabenschaltung mit Rücktrittbremse verfügen. Da die Erfindung auf Reibungskräften basiert, die durch Umschlingung erreicht werden, ergibt sich eine Maximalhaftkraft, ab der die Schlaufe wieder zu rutschen beginnt unter Ausübung einer Reibkraft. Dadurch wird auch bei starker Betätigung vermieden, dass es zu einer Radblockade kommt. Die Erfindung lässt sich ferner für Bremssysteme mit Antiblockiersystem verwenden. Andererseits kann dieser Effekt auch als Überlastsicherung für die beteiligten Bremskomponenten genutzt werden
Mit dem Bremsaktor lässt sich aus einer Rücktrittbewegung eine Bremsaktorbewegung ableiten. Diese kann durch Anordnung einer Bremse an dem Hebelelement oder durch Anordnung eines Endes einer mechanischen (oder hydraulischen) Verbindung, die zu einer Bremse führt, an eine Bremse übertragen werden. Hierzu wird vorzugsweise ein Befestigungs- oder Halterungselement in der Reichweite des Hebels vorgesehen, mit dem sich eine Bremse oder ein Bremsverbindungsende zur Betätigung durch den Hebel anbringen lassen.

Der Bremsaktor umfasst ferner einen Anschlag, der an der Seite des Hebels angeordnet ist, die der Brems-Betätigungsrichtung entgegengesetzt ist. Die Brems-Betätigungsrichtung ist die Bewegungsrichtung des Hebelelements, in der sich das Hebelelement bewegt oder hin ausrichtet bei Antrieb der Pedalantriebswelle entgegen der Antriebsrichtung. Das Hebelelement kommt mit dem Anschlag in Kontakt, wenn die Pedalantriebswelle in Antriebsrichtung betrieben wird. Der Anschlag ist daher auf der Seite des Hebelelements, zu der sich das Hebelelement hin bewegt, wenn die Pedalantriebswelle in Antriebsrichtung betrieben wird. Der Anschlag ist ortsfest gegenüber dem Innenraum angeordnet, der zur Aufnahme der Pedalantriebswelle eingerichtet ist. Der Anschlag ist derart angeordnet, dass zwischen der Stelle, an der das Hebelelement eine Bremsaktorbewegung an eine Bremse überträgt, und dem Anschlag selbst das Hebelelement liegt.

Vorzugsweise umfasst der Bremsaktor eine Feder, die eine Federkraft auf den Hebel ausübt, die von dem Innenraum weg gerichtet ist. Die Feder ist vorzugsweise eine Druckfeder, die an der Seite des Hebelelements angeordnet ist, die dem Hohlraum zugewandt ist. Die Feder ist an einer Stelle gelagert, die ortsfest mit einer Drehlagerung (mittelbar) verbunden ist, die zur drehbaren Lagerung der Pedalantriebswelle eingerichtet ist. Der Anschlag ist auf die gleiche Art und Weise wie diese Stelle gelagert.

Gemäß einer weiteren Ausführungsform Bremsaktor ist das Hebelelement ferner einer von dem Innenraum weg weisenden Verlängerung ausgestattet. An dieser Verlängerung ist eine Betätigungsfläche vorgesehen, die sich mit dem Hebel dreht. Die Betätigungsfläche und die Verlängerung sind mit dem Hebelelement fest verbunden, vorzugsweise durch einteilige Ausbildung. Die Betätigungsfläche ist gegenüber einer feststehenden Befestigungsschnittstelle angeordnet, welche eingerichtet ist, eine Schnittstelle einer Bremsbetätigungsübertragungseinrichtung zu halten. Eine derartige Schnittstelle ist eingerichtet, einen mechanischen Bremsensteueranschluss oder ein Ende einer mechanischen (oder hydraulischen) Verbindung zu einer Bremse zu lagern, so dass die erfindungsgemäß erzeugte Bremsaktorbewegung an eine Bremse übertragen werden kann, um diese anzusteuern. Hierzu wird vorzugsweise ein Element in der Reichweite des Hebels vorgesehen, mit dem sich eine Bremse oder ein Bremsverbindungsende zur Betätigung durch den Hebel anbringen lassen.

Die Erfindung wird ferner vorgesehen durch ein Tretkurbelgetriebe eines Fahrrads mit einem erfindungsgemäßen Bremsaktor. Das Tretkurbelgetriebe umfasst die Pedalantriebswelle, die sich senkrecht durch die Schlaufe hindurch erstreckt. Die Schlaufe umgreift die Pedalantriebswelle zumindest halb umfänglich, um bei Rücktritt eine Reibkraft zu erzeugen. Das Tretkurbelgetriebe kann vorgesehen werden durch Ausrüsten eines üblichen oder schon bestehenden Tretkurbelgetriebes mit dem erfindungsgemäßen Bremsaktor, wobei im Wesentlichen die Schlaufe um die Pedalantriebswelle herum angeordnet werden muss, und das Hebelelement an dem Tretkurbelgetriebe befestigt werden muss. An dem Hebelelement wird eine externe Bremse (Scheibenbremse, Trommelbremse oder Felgenbremse eines Rads des Fahrrads) angeschlossen, oder wird eine hinzuzufügende Scheibenbremse angeschlossen, die direkt an der Abtriebswelle, d.h. dem Kettenblatt, vorgesehen ist und auf diese wirkt. In diesem Fall darf zwischen Abtriebswelle und Hinterrad kein Freilauf vorhanden sein, damit eine direkte Kraftübertragung über die Kette auf das Hinterrad möglich ist. Andererseits muss bei dieser Ausführung die Kraftübertragung zwischen Pedalantriebswelle und Abtriebswelle durch einen Freilauf beim Zurücktreten unterbrochen werden. Beim Anschluss von externen Bremsen (d.h. Bremsen, die auf das Hinterrad wirken) wirkt die Bremskraft unmittelbar am Rad, wobei bei Verwendung einer an der Abtriebswelle integrierte Bremse, die von dem dort angeordneten Bremsaktor angesteuert wird, die Kette nicht nur die Antriebskraft sondern auch die Bremskraft überträgt. Jedoch kann eine Ausführungsform mit an der Abtriebswelle integrierter Bremse kompakt in einem Gehäuse angeordnet werden. Das Tretkurbelgetriebe kann somit ferner eine Scheibenbremse umfassen, deren Steuereingang mit dem Hebelelement verbunden ist, wobei die Scheibenbremse an der Abtriebswelle angeordnet ist und auf diese wirkt.

Eine weitere Ausführungsform des erfindungsgemäßen Tretkurbelgetriebe sieht vor, dass ferner eine Halterung als feststehende Befestigungsschnittstelle vorgesehen ist, die eingerichtet ist, eine erste Komponente eines Bowdenzugs oder einer Hydraulikbremsleitung zu halten. Das Hebelelement ist zumindest bei Eingreifen der Umlaufführung (als Straffungselement ausgestaltet) eingerichtet ist, eine Kraft auf eine zweite, gegenüber der ersten Komponente beweglichen Komponente des Bowdenzugs oder Hydraulikbremsleitung auszuüben, um die erste Komponente relativ zu der zweiten Komponente zu verschieben. Dadurch wird mechanische die Bremsaktorbewegung auf die beiden Komponenten übertragen, die zusammen eine mechanische Verbindung zur Übertragung von Längsbewegungen vorsehen. Die erste Komponente kann die Führung eines Bowdenzugs sein, und die zweite Komponente kann die innere Kabelverbindung des Bowdenzugs sein. Die erste Komponente kann ferner eine Hydraulikleitung sein, und die zweite Komponente kann eine Zylinderbefestigung eines Zylinders der Hydraulikleitung sein. Bowdenzug bzw. Hydraulikleitung führen zu einer Hinterrad- oder Vorderradbremse.

Die Erfindung wird ferner realisiert durch die Funktionsweisen der Komponenten der erfindungsgemäßen Vorrichtung. Die Erfindung wird daher vorgesehen von einem Verfahren zum Erzeugen einer Bremsaktorbewegung für ein Fahrrad. Eine Schlaufe ist um die Pedalantriebswelle und um eine Umlaufführung eines Hebelelements geschlungen. Bei Antrieb der Pedalantriebswelle in Antriebsrichtung wird ein Hebelelement durch die Schlaufe, die über ein Federelement leicht vorgespannt ist mitgenommen. Sobald das Hebelelement in Richtung des Anschlags bewegt wird, wird der Hebel in die Bewegungsrichtung der Pedalantriebswelle bewegt. Durch die Drehachse des Hebelelements (bzw. deren Anordnung relativ zur Pedalantriebswelle) und der Anordnung der Umlaufführung verkürzt sich der Abstand zwischen Pedalantriebswelle und Umlaufführung und die Schlaufe ist nicht mehr gespannt. Im ungespannten Zustand der Schlaufe kann die Pedalantriebswelle so ohne Reibung weiterdrehen.

Bei Antrieb der Pedalantriebswelle in Rücktrittrichtung (= entgegen der Antriebsrichtung der Pedalantriebswelle) wird das Hebelelement über die (durch Federkraft) leicht vorgespannte Schlaufe mitgenommen, bis das Hebelelement an einem Element anliegt, das als Schnittstelle zur Bremskraftübertragung ausgeführt ist. Durch diese Bewegung wird die Umlaufführung von der Pedalantriebswelle weg bewegt, wodurch die Umlaufführung die Schlaufe spannt und somit eine kraftübertragende Verbindung (aufgrund der mit dem Abstand zunehmenden Reibung) zwischen Pedalantriebswelle und Hebelelement erzeugt. Wird die Pedalantriebswelle durch die Rücktrittbewegung noch weiter zurückgedreht, bewegt sich das Hebelelement gegen des Widerstand, den das Schnittstellenelement entgegenbringt, weg von der Pedalantriebswelle. Dadurch wird die Bremse betätigt, die an das Schnittstellenelement angeschlossen ist. Durch die Erhöhung des Abstandes zwischen Pedalantriebswelle und Umlaufführung wird die Vorspannung der Schlaufe erhöht. Damit steigt das Reibmoment, das von der Pedalantriebwelle über die Schlaufe an das Hebelelement und schließlich an die Bremse übertagen werden kann. Mit zunehmender Rücktrittkraft erhöht sich auch die Kraft auf die Bremsschnittstelle. Dadurch ist die Kraft, die an der Bremsschnittstelle erzeugt wird, direkt abhängig von der Rücktrittkraft, die auf die Pedalantriebswelle vom Fahrer ausgeübt wird.

Dadurch, dass die Schlaufe keinen Form- sondern einen Reibschluss mit der Pedalantriebswelle bildet, ist mit diesem erfindungsgemäßen Aufbau auch eine Überlastsicherung möglich. Über das Reibmoment lässt sich das Bremssystem so einstellen, dass die Tretkurbel durchrutscht, wenn mit einem höheren Drehmoment nach hinten gedreht wird, als für die Bremswirkung erforderlich ist, bzw. für ein sicheres Bremsgefühl gewünscht wird.

Vorzugweise nach dem erfindungsgemäßen Verfahren wird eine Federkraft auf das Hebelelement ausgeübt, die diesen von der Pedalantriebswelle weg drückt. Die Drehung des Hebelelements von der Pedalantriebswelle weg ist durch die Schlaufe begrenzt.

Weiterhin kann die Bremsaktorbewegung des Hebelelements an einen Steuereingang einer Scheibenbremse übertragen werden, die mit der Abtriebswelle verbunden ist.

Der Anschlag begrenzt die Hebelbewegung in eine Richtung. Da die Straffung der Schlaufe mit der Hebelbewegung einhergeht, ist auch die Straffung beschränkt, so dass in dieser Richtung mangels Straffung der Schlaufe kein Reibschluss zwischen der Pedalantriebswelle und der Schlaufe hergestellt werden kann. Dies betrifft nur eine Antriebsrichtung und entspricht einem offenen Freilauf. Der offene Freilauf ist mit einer Antriebsbewegung der Pedalantriebswelle verknüpft.

In der Richtung, die dem Anschlag 70 entgegengesetzt ist, kann sich das Hebelelement um eine größere Distanz bewegen, da dort kein Anschlag die Bewegung begrenzt. An der Stelle, an der das Hebelelement auf die mechanische Schnittstelle trifft, ist die Drehung des Hebelelements bereits soweit fortgeschritten, dass das Band gestrafft ist und ein Reibschluss die Pedalantriebswelle mit der Schlaufe verbindet. Dadurch wird bei Erreichen der Bremsschnittstelle durch das Hebelelement bereits eine Kraft über den Reibschluss von der Pedalantriebswelle an das Hebelelement übertragen, das die Kraft an die Bremsschnittstelle weitergibt. Da in dieser Richtung, die der erstgenannten Richtung entgegengesetzt ist, eine Kraftübertragung stattfindet, entspricht dies einem geschlossenen Freilauf. Der geschlossene Freilauf ist mit einer Rücktrittbewegung verknüpft. Der Freilauf verbindet die Pedalantriebswelle mit der Bremsschnittstelle. Diese Verbindung ist nur aktiv, wenn die Schlaufe aufgrund der weiteren Drehung des Hebelelements gespannt ist, und ist nicht aktiv, wenn die Schlaufe aufgrund des Anschlags nicht weiter von dem Hebelelement gespannt werden kann, wobei der Anschlag die weitere Bewegung des Hebelelement verhindert und das Hebelelement nicht über eine Position hinaus lässt, in der das Hebelelement über die Umlaufführung die Schlaufe straffen könnte. In der Richtung des Anschlags wird von dem Anschlag eine weitere Drehung des Hebelelements verhindert, die zu einer wesentlichen Straffung der Schlaufe führen könnte.

### Kurze Beschreibung der Figuren

Ausführungsbeispiele der Erfindung sind in den Figuren dargestellt und werden in der nachfolgenden Beschreibung näher erläutert.

Es zeigen:

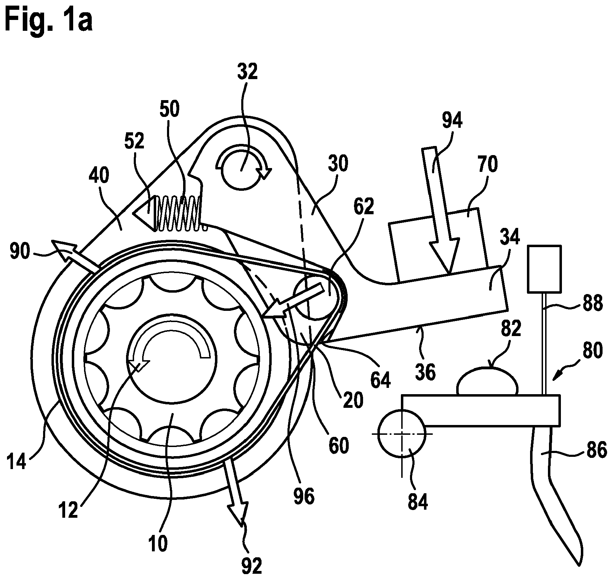

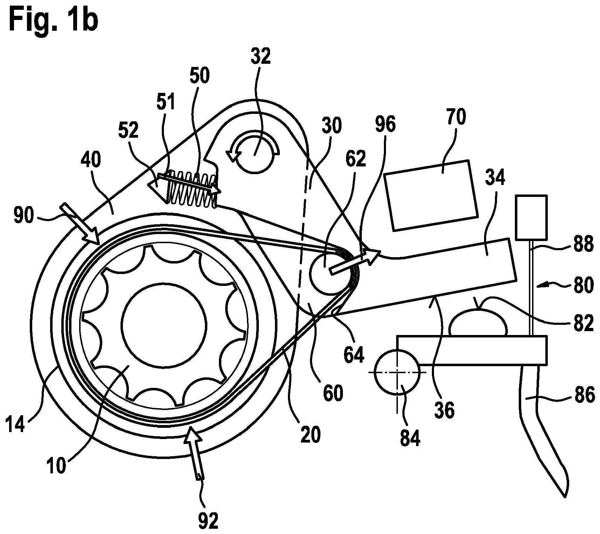

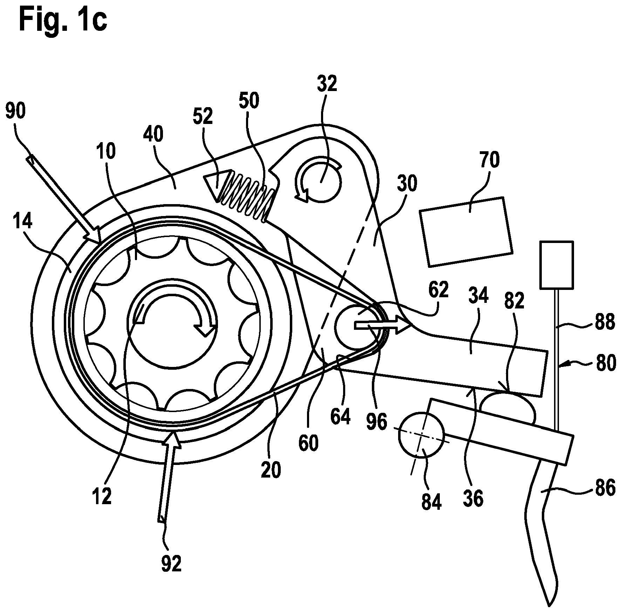

Figur 1a, b, c eine Ausführungsform der Erfindung in drei verschiedenen Positionen.

### Ausführungsbeispiele

In Figur 1a ist eine Ausführungsform eines erfindungsgemäßen Bremsaktors in Antriebsfahrtposition dargestellt. Die Pedalantriebswelle (d.h. Kurbelwelle) 10 bewegt sich in Antriebsdrehrichtung 12. Zwischen Schlaufe 20 und Welle 10 befindet sich eine Lücke, es wird keine wesentliche Reibkraft übertragen (d.h. es besteht kein Reibschluss). Das Hebelelement 30 ist über eine Drehlager 32, das entfernt zur Rotationsachse der Welle 10 gelegen ist, mit einem Träger 40 verbunden, in dem ebenso die Welle 10 über ein Drehlager 14 gelagert ist. Der Träger 40 weist ferner ein fest damit verbundenes Federlager 52 auf, an dem eine Druckfeder 50 angeordnet ist, die gegen ein Auflager 34 des Hebelelements 30 drückt. Das Auflager 34 befindet sich beabstandet von dem Drehlager 32, jedoch in dessen Nähe, um ein Drehmoment auf das Hebelelement auszuüben.

Das Hebelelement weist eine Vertiefung 60 (mit Erstreckungsrichtung senkrecht zur Zeichenebene) auf, in der sich ein Abschnitt der Schlaufe 20 befindet sowie eine Umlaufführung 62, die sich von der Vertiefung erhebt. Die Vertiefung weist ferner einen Seitenrand 64 auf, der in Form eines sich senkrecht zur Zeichenebene erstreckenden Flächenabschnitts ausgestaltet ist. In der in Figur 1a dargestellten Position (Antriebsfahrt) befindet sich das Hebelelement (bzw. dessen Verlängerung 34) an einem oberen Anschlag 70. In dieser Position kann sich das Hebelelement 30 nicht weiter von der Pedalantriebswelle 10 entfernen, da die Bewegung der Hebelverlängerung 34 nach oben durch den Anschlag 70 begrenz ist.
Die Verlängerung 34 weist eine Betätigungsfläche 36 auf, die einer Schnittstelle 80 zur Übertragung der Bremsaktorbewegung zugewandt ist, jedoch in der Antriebsfahrtposition diese nicht kontaktiert. Die Schnittstelle 80 umfasst eine Betätigungsfläche 82, die aus einer Seite durch ein Drehlager 84 drehbar gelagert ist und auf der gegenüberliegenden Seite mit der äußeren Führung 86 eines Bowdenzugs verbunden ist, dessen inneres Kabel 88 ortsfest gelagert ist.

Die Pfeile 90, 92 zeigen die Orientierung der Schlaufe (radial von der Welle 10 weg gerichtet), und er Pfeil 94 zeigt die Gegenlagerkraft, mit der der Anschlag auf die Verlängerung 34 des Hebelelements 36 wirkt. Pfeil 96 zeigt die Kraft, die auf die Umlaufführung 62 von der Schlaufe 20 ausgeübt wird, wobei die Schlaufe 20 in Figur 1a ungespannt ist und ebenso im Wesentlichen keine Reibkraft zwischen Schlaufe 20 und der Pedalantriebswelle 10 entsteht.

In Figur 1b ist die Ausführungsform von Figur 1a in Freilauffahrt dargestellt. Die dargestellten Komponenten sind identisch, weshalb die gleichen Bezugszeichen verwendet werden. Im Folgenden wird nur auf die Unterschiede und Besonderheiten der Freilauffahrtposition (gegenüber der Antriebsfahrtposition) abgestellt.

Im Gegensatz zur in Figur 1a dargestellten Position ist bei der in Figur 1b dargestellten Position die Welle 10 nicht in Bewegung (relativ zum Träger 40), wobei die Schlaufe 20 auf der Welle 10 (geringfügig) aufliegt. Trotz des Kontakts wird keine Kraft übertragen, da sich Welle 10 nicht in Bewegung befindet und sich somit auch nicht gegenüber der Schlaufe 20 bewegt. Pfeil 96 zeigt von der Welle 10 weg und entspricht der Orientierung, mit der die Feder 50 den Hebel 30 bewegt. Die Schlaufe 20 ist zwischen Lager 10 und Umlaufführung 62 gemäß der Federkraft 50 und der Hebelwirkung gespannt. Es ist zu erkennen, dass durch die Federkraft (dargestellt durch Pfeil 51) die Verlängerung 34 bereits von dem Anschlag 70 entfernt ist. Jedoch überträgt die Betätigungsfläche 36 des Hebelelements keine Kraft auf die dazu komplementäre Betätigungsfläche 82 der Schnittstelle 80, die Betätigungsflächen berühren sich nicht.

In Figur 1c ist die Ausführungsform von Figur 1a und b während eines Bremsvorgangs dargestellt. Die dargestellten Komponenten sind identisch, weshalb die gleichen Bezugszeichen verwendet werden. Im Folgenden wird nur auf die Unterschiede und Besonderheiten der Position während des Bremsvorgangs (gegenüber der Antriebsfahrtposition und Freilauffahrt) abgestellt.

Wie auch in Figur 1b ist die Schlaufe 20 in Figur 1c in direktem Kontakt mit der Welle 10, wobei sich die Welle jedoch gemäß Pfeil 12 dreht. Durch die Drehrichtung wird das Hebelelement 30 gegen den Anschlag der Schnittstelle 82 gedrückt. Dadurch wird die Schlaufe 20 nach außen gezogen, siehe Pfeil 96, wobei die Umlaufführung 62 die Schlaufe strafft. Dadurch wird die Reibverbindung zwischen Welle 10 und Schlaufe 20 hergestellt, wodurch (gemäß der Betätigung der Welle 10) die an der Schlaufe angeschlossene Umlaufführung 20 das Hebelelement 30 bewegt und zu der mechanischen Schnittstelle 80 hin bewegt. Durch den Zug, der die Welle 10 durch die Haftverbindung (zwischen Welle 10 und Schlaufe 20) auf die untere Seite der Schlaufe 20 ausübt, betätigt Verlängerung 34 des Hebelelements 30 die Schnittstelle 80.

Die Betätigungsfläche 36 der Verlängerung 34 drückt auf die Betätigungsfläche 82 der Schnittstelle 80, die nachgibt und aufgrund der Drehung um das Drehlager 84 der Schnittstelle 80 die äußere Führung eines Bowdenzugs gegenüber dem innenliegenden Kabel 88 bewegt. Diese Bewegung wird von dem Bowdenzug weitergeleitet an externe Bremsen. Ferner kann der Bowdenzug auch mit einer Scheibenbremse (nicht dargestellt) verbunden sein, die an der Welle 10 angeordnet ist und auf diese gemäß Betätigung wirkt.

## Patentansprüche

1. Bremsaktor für ein Fahrrad, **dadurch gekennzeichnet, dass** der Bremsaktor eine Schlaufe (20) umfasst, die zur Montage an eine Pedalantriebswelle (10) eingerichtet ist, wobei die Schlaufe (20) einen Innenraum vorsieht, der eingerichtet ist, die Pedalantriebswelle (10) umfänglich aufzunehmen, wobei der Bremsaktor ferner ein Hebelelement (30) umfasst, das von einem Drehlager (32) versetzt zu dem Innenraum gelagert ist, wobei das Hebelelement (30) eine Umlaufführung (62) für die Schlaufe (20) aufweist, die innerhalb der Schlaufe (20) angeordnet ist und eingerichtet ist, die Schlaufe (20) über die Umlaufführung (62) abhängig von einer Winkelposition des Hebelelements (30) zu spannen.

2. Bremsaktor nach Anspruch 1, der ferner einen Anschlag (70) umfasst, der an der Seite des Hebelelements (30) angeordnet ist, die der Betätigungsrichtung entgegengesetzt ist, wobei der Anschlag ortsfest gegenüber dem Innenraum angeordnet ist, der zur Aufnahme der Pedalantriebswelle (10) eingerichtet ist und die Länge der Schlaufe (20) sowie die Position des Hebelelements (30) relativ zum Anschlag (70) eingerichtet sind, die Schlaufe (20) spannungsfrei an der Pedalantriebswelle (10) vorzusehen, wenn sich das Hebelelement an dem Anschlag befindet, und die Schlaufe (20) unter Spannung an dem Innenraum anliegt, wenn sich das Hebelelement an einer dazu entgegengesetzten Position befindet.

3. Bremsaktor nach Anspruch 1 oder 2, wobei der Bremsaktor eine Feder (50) umfasst, die eine Federkraft auf das Hebelelement (30) ausübt, die von dem Innenraum Schlaufeweg gerichtet ist.

4. Bremsaktor nach einem der vorangehenden Ansprüche, wobei das Hebelelement (30) ferner einen von dem Innenraum weg weisenden Verlängerung (34) aufweist, an der eine Betätigungsfläche (36) vorgesehen ist, die sich mit dem Hebel (30) dreht, und die gegenüber einer feststehenden Befestigungsschnittstelle (80) angeordnet ist, welche eingerichtet ist, eine Schnittstelle einer Betätigungsübertragungseinrichtung zu halten.

5. Tretkurbelgetriebe für ein Fahrrad, mit dem Bremsaktor nach einem der vorangehenden Ansprüche, wobei das Tretkurbelgetriebe die Pedalantriebswelle (10) umfasst, die sich senkrecht durch die Schlaufe (20) hindurch erstreckt, wobei die Schlaufe (20) die Pedalantriebswelle (10) zumindest halb umfänglich umgreift.

6. Tretkurbelgetriebe nach einem der vorangehenden Ansprüche, das ferner eine Halterung als feststehende Befestigungsschnittstelle umfasst, die eingerichtet ist, eine erste Komponente (88) eines Bowdenzugs oder einer Hydraulikbremsleitung zu halten, wobei das Hebelelement (30) eine Kraft auf eine zweite, gegenüber der ersten Komponente beweglichen Komponente (86) des Bowdenzugs oder Hydraulikbremsleitung auszuüben, um die erste Komponente relativ zu der zweiten Komponente zu verschieben, wobei die Schlaufe eingerichtet ist, unter Spannung an dem Innenraum anzuliegen, wenn sich das Hebelelement (30) an der Befestigungsschnittstelle befindet.

7. Tretkurbelgetriebe nach Anspruch 5 oder 6, das ferner eine Scheibenbremse umfasst, deren Steuereingang mit dem Hebelelement (30) verbunden ist, wobei die Scheibenbremse an einer Abtriebswelle des Tretkurbelgetriebes angeordnet ist und auf diese wirkt.

8. Verfahren zum Erzeugen einer Bremsaktorbewegung für ein Fahrrad, wobei eine um die Pedalantriebswelle (10) und um eine Umlaufführung (62) eines Hebelelements (30) geschlungene Schlaufe (20) bei Antrieb der Pedalantriebswelle (10) in Antriebsrichtung der Pedalantriebswelle (10) , die Schlaufe (20), wenn sich das Hebelelement am Anschlag befindet, spannungsfrei die Pedalantriebswelle (10) umgibt, und bei Antrieb der Pedalantriebswelle (10) entgegengesetzt zur Antriebsrichtung wird das Hebelelement 30 gegen den Anschlag der Schnittstelle 82 gedrückt. wobei die Umlaufführung (62) dadurch in eine von der Pedalantriebswelle (10) entferntere Position einnimmt und dadurch die Schlaufe (20) gegenüber der Pedalantriebswelle (10) verspannt wird.

9. Verfahren nach Anspruch 8, wobei eine Federkraft (51) auf das Hebelelement (30) ausgeübt wird, die diesen von der Pedalantriebswelle (10) weg drückt.

10. Verfahren nach Anspruch 8 oder 9, wobei die Bremsaktorbewegung des Hebelelements (30) an einen Steuereingang einer Scheibenbremse übertragen wird, die mit der Pedalantriebswelle (10) verbunden ist, um bei Vorliegen einer Bremsaktorbewegung, bei der das Hebelelement (30) von der Pedalantriebswelle (10) weg bewegt wird, d.h. im Falle eines auf die Pedalantriebswelle ausgeübten Rücktritts, eine Bremskraft auf die Pedalantriebswelle auszuüben.

## Claims

1. Brake actuator for a bicycle, **characterized in that** the brake actuator comprises a strap (20) which is set up for mounting onto a pedal drive shaft (10), the strap (20) providing an interior space which is set up to receive the pedal drive shaft (10) circumferentially, the brake actuator comprising, furthermore, a lever element (30) which is mounted by a rotary bearing (32) in an offset manner with respect to the interior space, the lever element (30) having a circulating guide (62) for the strap (20), which circulating guide (62) is arranged within the strap (20) and is set up to tension the strap (20) over the circulating guide (62) in a manner which is dependent on an angular position of the lever element (30) .

2. Brake actuator according to Claim 1, which comprises, furthermore, a stop (70) which is arranged on that side of the lever element (30) which is opposed to the actuating direction, the stop being arranged in a stationary manner with respect to the interior space which is set up to receive the pedal drive shaft (10), and the length of the strap (20) and the position of the lever element (30) relative to the stop (70) being set up to provide the strap (20) in a tension-free manner on the pedal drive shaft (10) if the lever element is situated on the stop, and the strap (20) bearing under tension against the interior space if the lever element is situated in a position which is opposed thereto.

3. Brake actuator according to Claim 1 or 2, the brake actuator comprising a spring (50) which exerts a spring force on the lever element (30), which spring force is directed away from the interior space strap.

4. Brake actuator according to one of the preceding claims, the lever element (30) having, furthermore, an extension (34) which points away from the interior space and on which an actuating face (36) is provided which rotates with the lever (30) and which is arranged opposite a stationary fastening interface (80) which is set up to hold an interface of an actuating transmission device.

5. Pedal crank mechanism for a bicycle, having the brake actuator according to one of the preceding claims, the pedal crank mechanism comprising the pedal drive shaft (10) which extends perpendicularly through the strap (20), the strap (20) engaging around at least half the circumference of the pedal drive shaft (10).

6. Pedal crank mechanism according to one of the preceding claims, which comprises, furthermore, a holding device as a stationary fastening interface which is set up to hold a first component (88) of a Bowden cable or a hydraulic brake line, the lever element (30) to exert a force on a second component (86) of the Bowden cable or hydraulic brake line, which second component (86) is movable with respect to the first component, in order to displace the first component relative to the second component, the strap being set up to bear under tension against the interior space if the lever element (30) is situated at the fastening interface.

7. Pedal crank mechanism according to Claim 5 or 6, which comprises, furthermore, a disc brake, the control inlet of which is connected to the lever element (30), the disc brake being arranged on an output shaft of the pedal crank mechanism and acting on the said output shaft.

8. Method for generating a brake actuator movement for a bicycle, a strap (20) which is wrapped around the pedal drive shaft (10) and around a circulating guide (62) of a lever element (30) surrounding the strap (20) the pedal drive shaft (10) in a tension-free manner if the lever element is situated on the stop, in the case of driving of the pedal drive shaft (10) in the drive direction of the pedal drive shaft (10), and the lever element 30 being pressed against the stop of the interface 82 in the case of driving of the pedal drive shaft (10) in an opposed manner with respect to the drive direction, the circulating guide (62) assuming a position which is further away from the pedal drive shaft (10) as a result, and the strap (20) being braced with respect to the pedal drive shaft (10) as a result.

9. Method according to Claim 8, a spring force (51) being exerted on the lever element (30), which spring force (51) presses the said lever element (30) away from the pedal drive shaft (10).

10. Method according to Claim 8 or 9, the brake actuator movement of the lever element (30) being transmitted to a control inlet of a disc brake which is connected to the pedal drive shaft (10), in order to exert a brake force on the pedal drive shaft in the case of the presence of a brake actuator movement, in the case of which the lever element (30) is moved away from the pedal drive shaft (10), that is to say in the case of backpedalling which is exerted on the pedal drive shaft.

## Revendications

1. Actionneur de frein pour un vélo, **caractérisé en ce que** l'actionneur de frein présente une boucle (20) qui est prévue pour être montée sur un arbre de pédalier (10), la boucle (20) prévoyant un espace interne qui est prévu pour recevoir sur son pourtour l'arbre de pédalier (10), l'actionneur de frein comprenant en outre un élément de levier (30) qui est supporté de manière décalée par rapport à l'espace interne par un palier pivotant (32), l'élément de levier (30) présentant un guidage périphérique (62) pour la boucle (20), lequel est disposé à l'intérieur de la boucle (20) et est prévu pour tendre la boucle (20) par le biais du guidage périphérique (62) en fonction d'une position angulaire de l'élément de levier (30) .

2. Actionneur de frein selon la revendication 1, comprenant en outre une butée (70) qui est disposée au niveau du côté de l'élément de levier (30) qui est opposé au dispositif d'actionnement, la butée étant disposée fixement par rapport à l'espace interne qui est prévu pour recevoir l'arbre de pédalier (10) et la longueur de la boucle (20) ainsi que la position de l'élément de levier (30) par rapport à la butée (70) étant prévues de manière à faire en sorte que la boucle (20) ne soit pas tendue au niveau de l'arbre de pédalier (10) lorsque l'élément de levier se trouve sur la butée, et la boucle (20) s'appliquant sous tension contre l'espace interne lorsque l'élément de levier se trouve dans une position opposée à celle-ci.

3. Actionneur de frein selon la revendication 1 ou 2, l'actionneur de frein comprenant un ressort (50) qui exerce une force de ressort sur l'élément de levier (30), laquelle est orientée à l'écart de l'espace interne la boucle.

4. Actionneur de frein selon l'une quelconque des revendications précédentes, dans lequel l'élément de levier (30) présente en outre un prolongement (34) tourné à l'écart de l'espace interne, au niveau duquel est prévue une surface d'actionnement (36) qui tourne avec le levier (30) et qui est disposée en regard d'une interface de fixation fixe (80) qui est prévue pour retenir une interface d'un dispositif de transfert d'actionnement.

5. Rouage à manivelle de pédalier pour un vélo, comprenant l'actionneur de frein selon l'une quelconque des revendications précédentes, le rouage à manivelle de pédalier comprenant l'arbre de pédalier (10) qui s'étend perpendiculairement à travers la boucle (20), la boucle (20) venant en prise autour de l'arbre de pédalier (10) au moins sur la moitié de sa périphérie.

6. Rouage à manivelle de pédalier selon l'une quelconque des revendications précédentes, comprenant en outre une fixation en tant qu'interface de fixation fixe qui est prévue pour retenir un premier composant (88) d'un câble Bowden ou d'une ligne de freinage hydraulique, l'élément de levier (30) pour exercer une force sur un deuxième composant (86) du câble Bowden ou de la ligne de freinage hydraulique déplaçable par rapport au premier composant afin de déplacer le premier composant par rapport au deuxième composant, la boucle étant prévue pour s'appliquer sous tension contre l'espace interne lorsque l'élément de levier (30) se trouve au niveau de l'interface de fixation.

7. Rouage à manivelle de pédalier selon la revendication 5 ou 6, comprenant en outre un frein à disque dont l'entrée de commande est connectée à l'élément de levier (30), le frein à disque étant disposé au niveau d'un arbre de prise de force du rouage à manivelle de pédalier et agissant sur celui-ci.

8. Procédé pour produire un déplacement d'un actionneur de frein pour un vélo, dans lequel une boucle (20) entourant l'arbre de pédalier (10) et un guidage périphérique (62) d'un élément de levier (30) lors de l'entraînement de l'arbre de pédalier (10) dans la direction d'entraînement de l'arbre de pédalier (10), la boucle (20), lorsque l'élément de levier est en butée, entoure sans tension l'arbre de pédalier (10), et lors de l'entraînement de l'arbre de pédalier (10) en sens inverse de la direction d'entraînement, l'élément de levier (30) est pressé contre la butée de l'interface (82). Dans lequel le guidage périphérique (62) adopte de ce fait dans une position plus éloignée de l'arbre de pédalier (10) et de ce fait la boucle (20) est tendue par rapport à l'arbre de pédalier (10).

9. Procédé selon la revendication 8, dans lequel une force de ressort (51) est exercée sur l'élément de levier (30), laquelle presse celui-ci à l'écart de l'arbre de pédalier (10).

10. Procédé selon la revendication 8 ou 9, dans lequel le déplacement de l'actionneur de frein de l'élément de levier (30) est transmis au niveau d'une entrée de commande d'un frein à disque qui est connecté à l'arbre de pédalier (10) afin d'exercer une force de freinage sur l'arbre de pédalier en présence d'un déplacement de l'actionneur de frein lors duquel l'élément de levier (30) est déplacé à l'écart de l'arbre de pédalier (10), c'est-à-dire dans le cas d'un pédalage en arrière exercé sur l'arbre de pédalier.
